# NEW EUROPEAN PATENT SPECIFICATION

(11) **EP 3 098 136 B2**
(45) Date of publication and mention of the opposition decision: **13.10.2021**
(45) Mention of the grant of the patent: 17.10.2018
(21) Application number: 15169838.8
(22) Date of filing: 29.05.2015
(51) Int. Cl.: B62B 5/00, B62B 3/10

(54) **DOLLY**
ROLLWAGEN
CHARIOT

(43) Date of publication of application: 30.11.2016
(73) Proprietor: K. Hartwall Oy AB, 01150 Söderkulla (FI)
(72) Inventor: RANINEN, Jussi, 01150 Söderkulla (FI)
(74) Representative: Laine IP Oy

(56) References cited:
- EP-A1- 0 487 147
- EP-A2- 2 733 043
- WO-A1-2011/076300
- DE-A1-102011 008 136
- DE-U1- 9 006 263
- DE-U1-202011 105 716
- GB-A- 1 253 029
- GB-A- 1 595 210
- GB-A- 2 422 364
- JP-B1- 5 613 358
- NL-A- 9 101 995
- US-A- 4 719 663
- US-A1- 2008 111 332

## Description

### FIELD

The present invention relates to transporting goods. In particular, the invention relates to dollies, on which parceled goods are transported and stored temporarily. To be precise, the invention relates to a dolly according to the preamble portion of claim 1.

### BACKGROUND

There is known a vast variety of different devices used for transporting parceled goods. Typically pieces, stacks thereof or crates carrying said pieces are loaded onto a wheeled platform, on which they are conveyed to shop floor or storage. These wheeled platforms are called dollies. Generic dollies are typically designed to provide a simple wheeled platform that is not intended to receive a specific piece. On the contrary, the design principle is to provide a structure that can bear the weight of heavy objects, such as engines, transmissions, industrial pumps and similar objects that would otherwise be difficult to transport by carrying. Accordingly, generic dollies traditionally feature a simple frame welded together from a plurality of steel beams and castors bearing-mounted to the bottom side of the deck or a reinforced frame assembly carrying the deck.

The deck of the dolly is typically flat to receive a box or crate containing the pieces to be transported. One example of such a dolly is disclosed in JP 5613358 B1, which proposes a flat quadrilateral deck mounted on four corner castors. The wheel plates of the castors are designed to receive the corner of the deck but simultaneously extend beyond the top side of the deck so as to provide a corner support for the contents of the dolly. The design includes to protruding plate portions on both lateral edges around the corner of the deck to which the castor is provided.

WO 2011/076300 A1 discloses a dolly with a quadrangular deck with a transport surface. Four restrainers have been adjustably attached to the transport surface of deck; one to each corner. The purpose of the restrainers is to allow for a good fit between the deck and objects of various sizes to be transported.

There remains, however, a need for a dolly that would benefit from the added lateral support provided by the corner supports of JP 5613358 B1, but which would be robust in that a damaged corner support would not lead to major disassembly of the dolly.

It is therefore the aim of certain embodiments herein described to provide a robust dolly with sufficient lateral support.

### SUMMARY

The aim is achieved by means of a novel dolly design, where the deck has a top side with a flat periphery defining a quadrilateral cargo carrying surface. The deck also has a flank, which extends from the periphery of the top side so as to create the thickness of the deck. Four demountable restrainers with a general L shape are attached to respective four corners of the deck with each of the four demountable restrainers attached to the flank through mutually cooperative and detachable shape couplings between the restrainer and the deck such to extend from the flank and to project past the top side for supporting parcelled goods on the deck. The flank comprises openings and the restrainer includes a lateral tab at both ends of the generally L shaped body for insertion into the corresponding openings on the flank.

The invention is defined by the features of claim 1. Some specific embodiments are defined in the dependent claims.

Considerably benefits are gained with aid of the novel construction. The detachable restrainers not only leave the deck flat to accommodate a vast variety of different cargo, lateral support is greatly improved. The removability of the restrainers enable standard castors to be used and maintain robustness provided by modularity. Similarly, restrainers of different height may be used on a single deck to adapt the dolly to receive taller or shorter items depending on the circumstance.

### BRIEF DESCRIPTION OF THE DRAWINGS

In the following, certain embodiments are described in greater detail with reference to the appended FIGURES, wherein:
FIGURE 1 illustrates a perspective view of dolly according to one embodiment,
FIGURE 2 illustrates a detail view of area A of FIGURE 1,
FIGURE 3 illustrates a detail view of area B of FIGURE 1,
FIGURE 4 illustrates an explosion of the dolly of FIGURE 1,
FIGURE 5 illustrates a detail view of area C of FIGURE 4,
FIGURE 6 illustrates an elevated perspective view of the dolly of FIGURE 1,
FIGURE 7 illustrates a detail view of area D of FIGURE 6,
FIGURE 8 illustrates a perspective view of dolly according to another embodiment,
FIGURE 9 illustrates a detail view of area E of FIGURE 8, and
FIGURE 10 illustrates a detail view of area F of FIGURE 8.

### EMBODIMENTS

In the present context, the term *flat* is intended to mean a shape, which is continuous enough not to disturb placement and sturdy support of items on the top side of the deck. In other words, the term flat in connection with the periphery or the peripheral edge of the deck is understood to be lacking a sill, step or similar protuberance, which might prevent an object of lying flat on the top side of the deck.

On a general level, the proposed construction is based on the idea of providing an otherwise flat dolly deck with laterally supporting restrainer pieces that are attached to the flank of the deck for leaving the top side of the deck unaffected. This way the deck retains a versatile load carrying ability. The restrainer pieces are attached in a detachable manner so as to provide robustness and modularity.

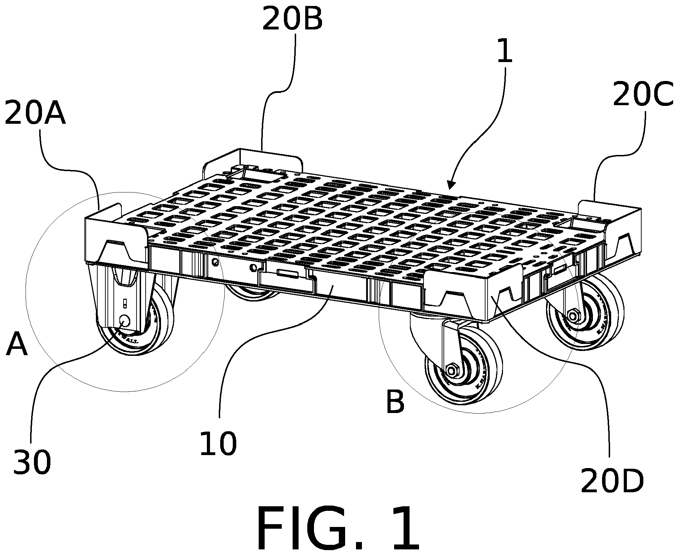

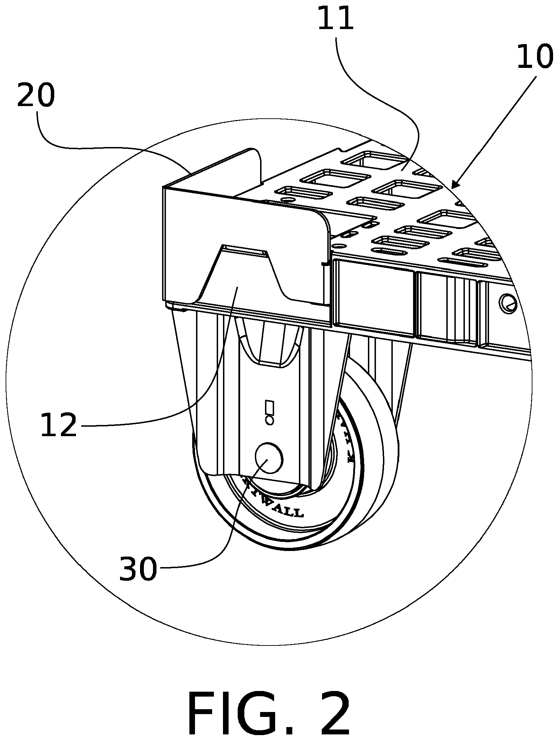

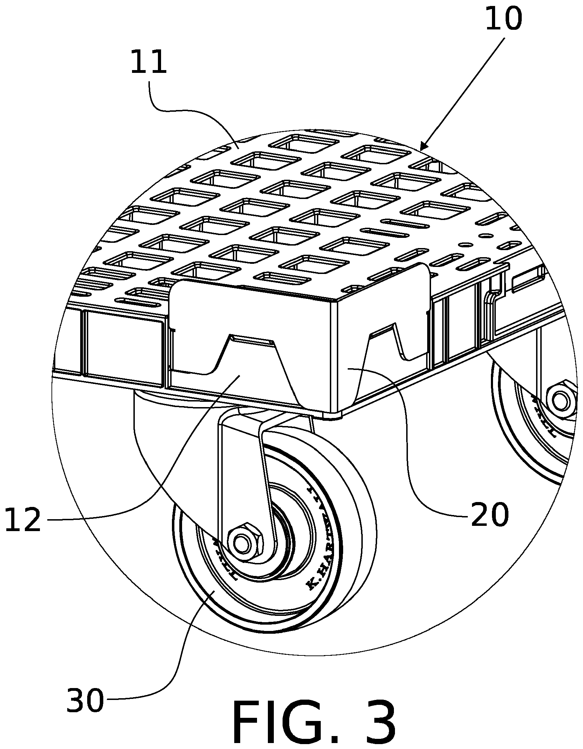

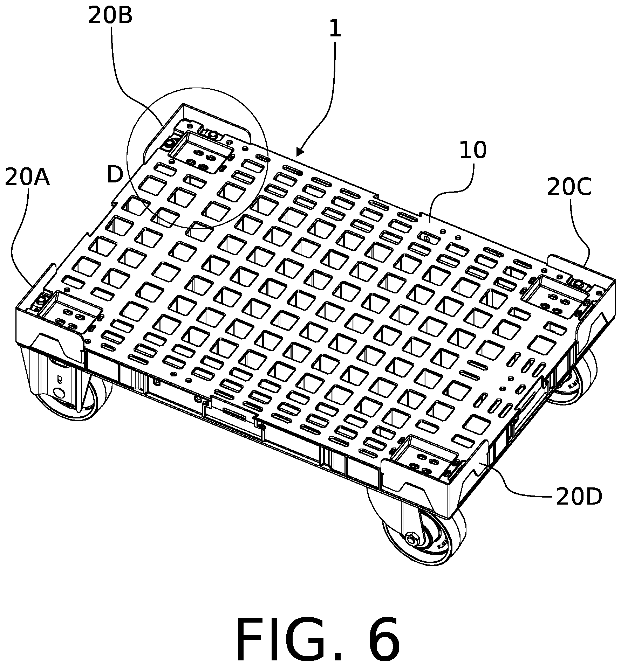

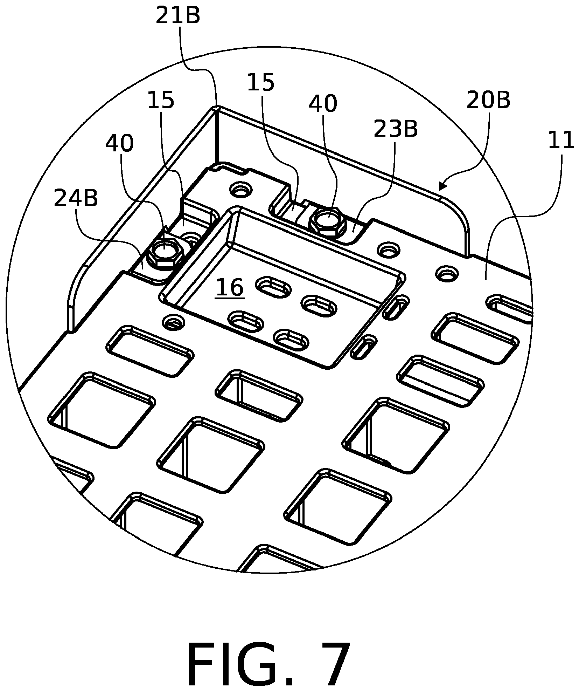

In the first embodiment shown in FIGURES 1 to 7, a dolly 1 is provided with a deck 10 made of a plastic material, such as PE-HD. The deck 10 is a quadrilateral load-bearing tray for receiving the items intended for transport. The deck 10 has a top side 11, which in the illustrated example is a generally flat surface with through holes for lightness and wheel recesses 16 (FIGURE 7) for receiving the wheel of another superposed dolly (not shown). The top side 11 therefore has a quadrilateral periphery, i.e. outer edge. The periphery is flat so that deck 10 may receive contents of different shape and size and optionally extend beyond the deck 10 while being supported by the top side 11. In other words, the peripheral edge of the deck 10 is flush with the flat top side 11, i.e. is at most at the same height as the top side 11. At the other side, the deck 10 has a bottom side, which acts as a mounting point for castors 30.

A flank 20 of the deck 10 extends between the top side 11 and the bottom side. The flank 20 is a lateral vertical side connecting the horizontal sides and creating the thickness of the deck 10. The flank 20 is recessed and perforated along the perimeter of the deck 10 for different purposes, which are described hereafter in greater detail.

The dolly 1 also includes restrainers 20 for supporting the items on the deck 10. The restrainers 20 are peripherally arranged support elements, which extend from the flank 12 past and above the top side 11 of the deck 10 so as to provide lateral support. The dolly 1 is equipped with four restrainers 20A, 20B, 20C, 20D, which are similar design to connect to the corner of the deck 10. As the restrainers 20A, 20B, 20C, 20D are similar, the letters of the reference signs only distinguish between individual restrainers shown in the FIGURES. It is therefore to be understood that each restrainer may include similar features described in connection with another restrainer.

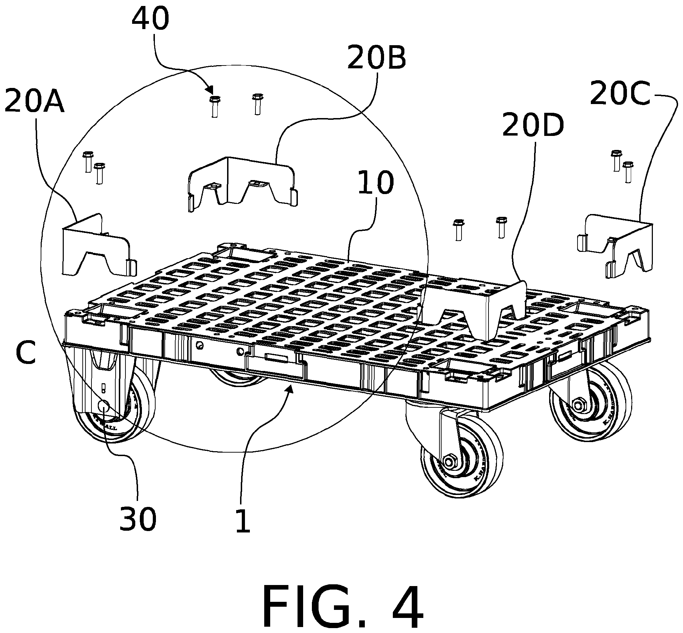

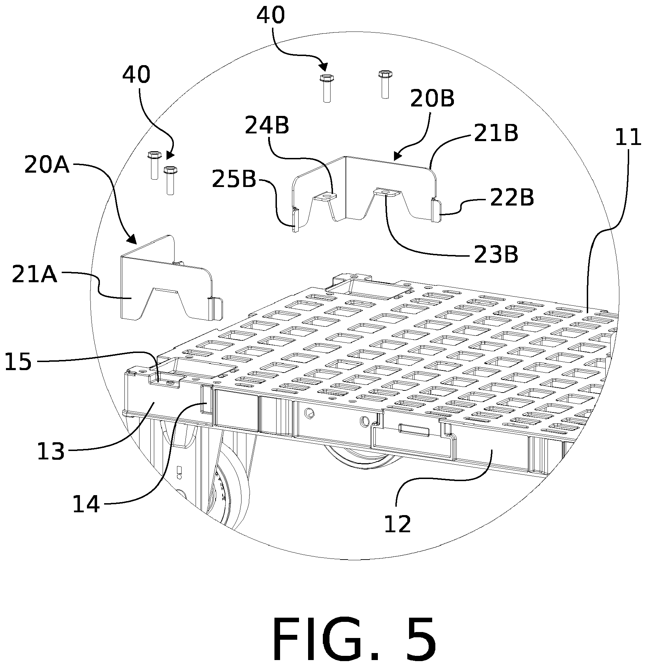

The restrainer 20 has a general L shape to attach to the flank 12 at the corner of the deck 10. In other words, the body 21 of the restrainer 20 includes two mutually orthogonal sections. The restrainer 20 and the deck 10 also have mutually cooperative and detachable shape couplings for attaching the restrainer 20 to the deck 10 in a detachable manner. FIGURES 4 to 7 illustrate the different interfaces between the deck 10 and the restrainer 20. Firstly, the restrainer 20 includes a lateral tab 22, 25 at both ends of the generally L shaped body 21. The tabs 22, 25 are intended to be inserted into corresponding openings 14 on the flank 12. The body 21 of the restrainer 20 is preferably made from a sturdy yet elastic material to allow elastic deformation of the restrainer 20 such to elastically bend the lateral tabs 22, 25 towards each other upon installation. Suitable materials include metals, particularly steels, aluminium and aluminium alloys, and plastics. Once the tabs 22, 25 have been inserted into the openings 14 on the flank 12, the spring-back factor of the restrainer body 21 returns the restrainer 20 into the original state. FIGURE 5 shows how the lateral tabs 22B, 25B extend laterally with an inward bent sill for slotting the lateral tabs 22B, 25B into the opening 14.

In addition to the lateral tabs 22, 25, the restrainer 20 includes brackets 23, 24, which engage with the top side 11 of the deck 10. The brackets 23B, 24B are shown in detail in FIGURES 5 and 7, which best show that the brackets 23B, 24B include openings, which align with corresponding openings (not shown) provided to the top side 11 of the deck 10. The aligned openings are designed to receive a penetrative affixer 40, such as a screw shown in the FIGURES, for affixing the bracket 20 to the deck 10 from above. The top side 11 of the deck 10 is provided with appropriate bracket recesses 15 for receiving the brackets 23, 24 such that the recess 15 has a depth, which is at least the depth of the thickness of the bracket 23B, 24B of the restrainer 20. Preferably the recess 15 has a depth great enough to receive the bracket 23B, 24B and the head of the affixer 40 in an embedded or flush manner so as to avoid disturbing the flatness of the top side 11. Similarly, the flank 12 has a recess 13 of a depth equal to or larger than that of the thickness of the restrainer 20 for flush or embedded installation of the restrainer 20.

The affixers 40 are shown in the illustrated example as screws. The screws 40 may be dialled into respective female threads in the holes of the deck. Alternatively, one or several screws could be dialled into respective female threads in the holes of the wheel plate of the castor underneath the deck (not shown). The receptive hole on the deck could then be a straight through hole. Such an arrangement would reduce the number of parts in the assembly by connecting the restrainer and the castor to the deck with the same affixer. Naturally, the screw could be replaced in all embodiments with any penetrative and detachable affixer, such as a pop rivet or similar.

In the illustrated example, the restrainer 20 includes four shape couplers for attachment to the deck 10, namely two lateral tabs 22, 25 and two brackets 23, 24. It would be also possible to omit one or several of these shape couplers.

Instead of attaching the restrainer 20 to the deck 10 with penetrative affixers such as described above with reference to the FIGURES, the restrainer 20 could also be attached to the deck 10 by means of snap-fit couplings (not shown). Foreseeable solutions for such snap-fit couplings include receiving slots on the flank 12 of the dolly 10 for receiving the thin restrainer by dropping from above, for example. The form fitting shape of the restrainer could also utilise the elastic properties of the restrainer. In this sense it would be beneficial to manufacture the restrainer out of plastic with appropriate elastic deformation properties, such as polyethylene (PE) and polypropylene (PP). Similarly, many constructional metals have sufficient yielding properties. The utilisation of the elasticity of the restrainer requires that the receptive form on the deck or the engaging portion of the restrainer or both is/are appropriately shapes so as to include a reverse taper for preventing the insertion or introduction of the restrainer in a resting or non-stressed state. To further strengthen the attachment of the restrainer the deck, particularly the flank thereof, may include a securing latch (not shown) which is moved from an open state to a closing state against a receiving chamber or similar (not shown) on the deck such to press the restrainer against the flank.

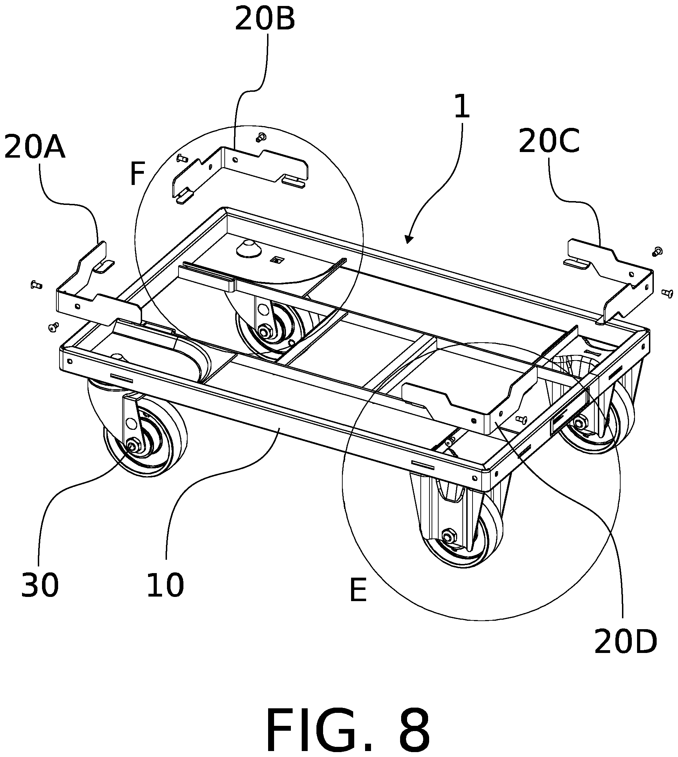

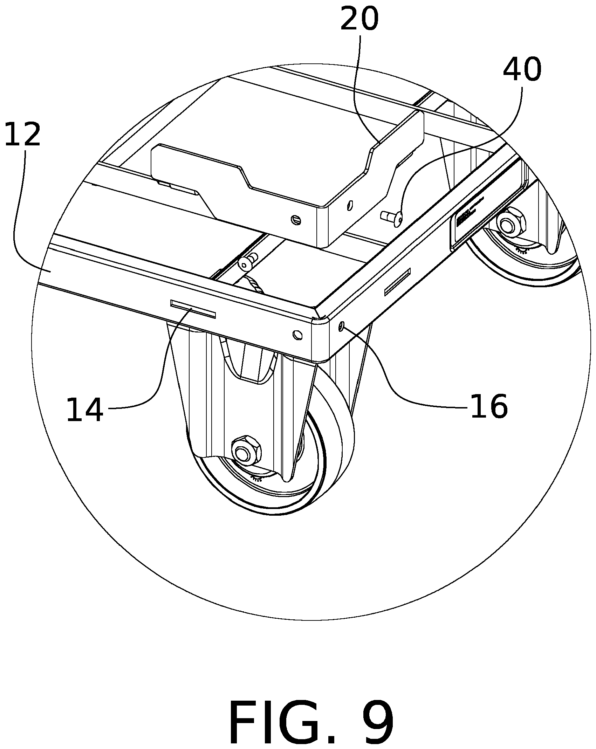

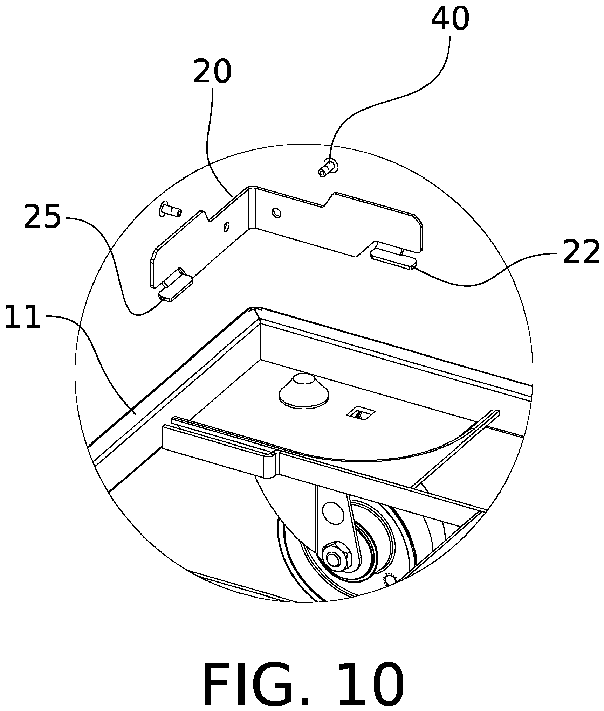

In the second embodiment shown in FIGURES 8 to 10, a dolly 1 is provided with a steel deck 10. In this embodiment, the top side 11 of the deck 10 is seen as the top surface of the outer frame of the deck 10 (FIGURE 10). In the alternative steel deck embodiment the shape coupling between the restrainer 20 and the deck 10 is slightly different from that described in connection with the first embodiment. The brackets engaging with the top side of the deck are omitted, wherein the restrainers 20 only include lateral tabs 22, 25 that are inserted into appropriately placed and shaped openings 14 on the flank 12 of the deck 10. The restrainers 20 are secured to the deck 10 with penetrative affixers 40, such as screws, which penetrate aligned holes 16 in the restrainer 20 and flank 12 (FIGURE 9).

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**REFERENCE SIGNS LIST**

| NUMBER | PART |
|---|---|
| 1 | dolly |
| 10 | deck |
| 11 | top side |
| 12 | side surface |
| 13 | restrainer recess |
| 14 | opening |
| 15 | bracket recess |
| 16 | wheel recess |
| 20 | restrainer |
| 21 | body |
| 22 | lateral tab |
| 23 | bracket |
| 24 | bracket |
| 25 | lateral tab |
| 30 | castor |
| 40 | affixer |

## Claims

1. A dolly (1) comprising a quadrilateral deck (10) with:
- a top side (11) for receiving parcelled goods, the top side (11) having a flat periphery, which defines a quadrilateral cargo carrying surface, and
- a flank (12) extending from the periphery of the top side (11) so as to create the thickness of the deck (10),
**characterized by** four demountable restrainers (20), which each have a general L shape and which are attached to the flank (12) of the dolly (1) at each corner of the quadrilateral deck (10) through mutually cooperative and detachable shape couplings between the restrainer (20) and the deck (10) such to extend from the flank (12) and to project past the top side (11) for supporting parcelled goods on the deck (10), wherein the flank (12) comprises openings (14) and the restrainer (20) includes a lateral tab (22, 25) at both ends of the generally L shaped body (21) for insertion into the corresponding openings (14) on the flank (12).

2. The dolly (1) according to claim 1, wherein the flank (12) extends from the periphery of the top side (11) to one direction and wherein the restrainer (20) extends from the flank (12) to a second direction, which is opposite to the first direction.

3. The dolly (1) according to claim 1 or 2, wherein the deck (10) comprises a bottom side, which opposes the top side (11), wherein the flank (12) connects the top side (11) to the bottom side at the periphery of the top side (11).

4. The dolly (1) according to claim 1, 2 or 3, wherein the restrainer (20) extends along the flank (12) and exceeding the top side (11) outside the periphery thereof.

5. The dolly (1) according to any of the preceding claims, wherein:
- the restrainer (20) has a thickness and wherein,
- the flank (12) has a recess (13) that has at least a depth equal to or larger than that of the thickness of the restrainer (20) for flush or embedded installation of the restrainer (20) in respect to the flank (12) of the deck (10).

6. The dolly (1) according to any of the preceding claims, wherein:
- the restrainer (20) comprises a bracket (23B, 24B), which is configured to engage with the top side (11) of the deck (10), and wherein
- the bracket (23B, 24B) of the restrainer (20) and the top side (11) of the deck (10) comprise aligning openings so as to receive a penetrative affixer (40) for affixing the bracket (20) to the deck (10) from above.

7. The dolly (1) according to claim 6, wherein the top side (11) of the deck (10) has a recess (15) that has at least a depth equal to or larger than that of the thickness of the bracket (23B, 24B) of the restrainer (20).

8. The dolly (1) according to any one of the preceding claims, wherein the generally L shaped body (21) of the restrainer (20) has two mutually orthogonal sections, which both comprise said tab (22B, 25B), and a bracket (23B, 24B).

9. The dolly (1) according to any of the preceding claims, wherein the deck (10) is made of a polymer material and wherein the restrainer (20) is made of a metallic material.

10. The dolly according to any of the preceding claims 1 to 8, wherein the deck and restrainer are made of a polymer material and wherein the restrainer is configured to be attached to the flank of the deck through a form fitting connection established by cooperating forms on the deck and restrainer, wherein the coupling between the deck and restrainer is aided by elastic properties of the polymer material of the restrainer.

11. The dolly (1) according to any of the preceding claims, wherein the dolly (1) is hand-propelled wheeled pallet.

## Patentansprüche

1. Transportwagen (1), umfassend eine vierseitige Tragefläche (10) mit:
- einer oberen Seite (11) zum Aufnehmen von verpackten Waren, wobei die obere Seite (11) einen flachen Rand aufweist, der eine vierseitige Frachttrageoberfläche definiert, und
- eine Flanke (12), die sich von dem Rand der oberen Seite (11) erstreckt, um die Dicke der Tragefläche (10) zu erzeugen,
**gekennzeichnet durch** vier abmontierbare Rückhalter (20), die jeweils im Allgemeinen eine L-Form aufweisen und die an der Flanke (12) des Transportwagens (1) an jeder Ecke der vierseitigen Tragefläche (10) durch miteinander zusammenwirkende und abnehmbare Formkupplungen zwischen dem Rückhalter (20) und der Tragefläche (10) angebracht sind, um sich von der Flanke (12) zu erstrecken und an der oberen Seite (11) vorbei zum Tragen von verpackten Waren auf der Tragefläche (10) hervorzuragen, wobei die Flanke (12) Öffnungen (14) umfasst und der Rückhalter (20) eine seitliche Lasche (22, 25) an beiden Enden des im Allgemeinen L-förmigen Körpers (21) zum Einsetzen in die entsprechenden Öffnungen (14) an der Flanke (12) beinhaltet.

2. Transportwagen (1) nach Anspruch 1, wobei die Flanke (12) sich von dem Rand der oberen Seite (11) in eine Richtung erstreckt und wobei der Rückhalter (20) sich von der Flanke (12) in eine zweite Richtung erstreckt, die entgegengesetzt zu der ersten Richtung ist.

3. Transportwagen (1) nach Anspruch 1 oder 2, wobei die Tragefläche (10) eine untere Seite umfasst, die entgegengesetzt zu der oberen Seite (11) ist, wobei die Flanke (12) die obere Seite (11) mit der unteren Seite an dem Rand der oberen Seite (11) verbindet.

4. Transportwagen (1) nach Anspruch 1, 2 oder 3, wobei der Rückhalter (20) sich entlang der Flanke (12) erstreckt und über die obere Seite (11) außerhalb des Rands davon hinausgeht.

5. Transportwagen (1) nach einem der vorhergehenden Ansprüche, wobei:
- der Rückhalter (20) eine Dicke aufweist und wobei
- die Flanke (12) eine Aussparung (13) aufweist, die mindestens eine Tiefe aufweist, die größer gleich der Dicke des Rückhalters (20) ist, zum bündigen oder eingebetteten Einbau des Rückhalters (20) in Bezug auf die Flanke (12) der Tragefläche (10).

6. Transportwagen (1) nach einem der vorhergehenden Ansprüche, wobei:
- der Rückhalter (20) eine Klammer (23B, 24B) umfasst, die dazu konfiguriert ist, mit der oberen Seite (11) der Tragefläche (10) in Eingriff zu kommen, und wobei
- die Klammer (23B, 24B) des Rückhalters (20) und die obere Seite (11) der Tragefläche (10) Ausrichtungsöffnungen umfassen, um ein durchdringendes Befestigungselement (40) zum Befestigen der Klammer (20) an der Tragefläche (10) von oben aufzunehmen.

7. Transportwagen (1) nach Anspruch 6, wobei die obere Seite (11) der Tragefläche (10) eine Aussparung (15) aufweist, die mindestens eine Tiefe aufweist, die größer gleich der Dicke der Klammer (23B, 24B) des Rückhalters (20) ist.

8. Transportwagen (1) nach einem der vorhergehenden Ansprüche, wobei der im Allgemeinen L-förmige Körper (21) des Rückhalters (20) zwei miteinander orthogonale Abschnitte aufweist, die beide die Lasche (22B, 25B) und eine Klammer (23B, 24B) umfassen.

9. Transportwagen (1) nach einem der vorhergehenden Ansprüche, wobei die Tragefläche (10) aus einem Polymermaterial hergestellt ist und wobei der Rückhalter (20) aus einem metallischen Material hergestellt ist.

10. Transportwagen nach einem der vorhergehenden Ansprüche 1 bis 8, wobei die Tragefläche und der Rückhalter aus einem Polymermaterial hergestellt sind und wobei der Rückhalter dazu konfiguriert ist, an der Flanke der Tragefläche durch eine formschlüssige Verbindung angebracht zu werden, die durch zusammenwirkende Formen auf der Tragefläche und dem Rückhalter erstellt wird, wobei die Kupplung zwischen der Tragefläche und dem Rückhalter durch elastische Eigenschaften des Polymermaterials des Rückhalters unterstützt wird.

11. Transportwagen (1) nach einem der vorhergehenden Ansprüche, wobei der Transportwagen (1) eine von Hand angetriebene, mit Rädern versehene Palette ist.

## Revendications

1. Chariot (1) comprenant un plateau quadrilatéral (10) avec :
- une partie supérieure (11) destinée à recevoir des articles emballés, la partie supérieure (11) comportant une périphérie plane, qui définit une surface quadrilatérale de transport de charge, et
- un flanc (12) s'étendant à partir de la périphérie de la partie supérieure (11) de manière à créer l'épaisseur du plateau (10),
**caractérisé par** quatre dispositifs de restriction (20) démontables, qui présentent chacun généralement une forme de L et qui sont attachés au flanc (12) du chariot (1) à chaque coin du plateau quadrilatéral (10) par des accouplements de forme coopérant entre eux et amovibles entre le dispositif de restriction (20) et le plateau (10) de manière à s'étendre à partir du flanc (12) et faire saillie depuis la partie supérieure (11) pour soutenir des articles emballés sur le plateau (10), dans lequel le flanc (12) comprend des ouvertures (14) et le dispositif de restriction (20) inclut une patte latérale (22, 25) aux deux extrémités du corps généralement en forme de L (21) pour une insertion dans les ouvertures correspondantes (14) sur le flanc (12).

2. Chariot (1) selon la revendication 1, dans lequel le flanc (12) s'étend à partir de la périphérie de la partie supérieure (11) dans une première direction et dans lequel le dispositif de restriction (20) s'étend à partir du flanc (12) dans une seconde direction, qui est opposée à la première direction.

3. Chariot (1) selon la revendication 1 ou 2, dans lequel le plateau (10) comprend une partie inférieure, qui est opposée à la partie supérieure (11), dans lequel le flanc (12) relie la partie supérieure (11) à la partie inférieure à la périphérie de la partie supérieure (11).

4. Chariot (1) selon la revendication 1, 2 ou 3, dans lequel le dispositif de restriction (20) s'étend le long du flanc (12) et dépassant la partie supérieure (11) à l'extérieur de la périphérie de celle-ci.

5. Chariot (1) selon l'une quelconque des revendications précédentes, dans lequel :
- le dispositif de restriction (20) possède une épaisseur et dans lequel,
- le flanc (12) comporte un renfoncement (13) qui possède au moins une profondeur égale ou supérieure à l'épaisseur du dispositif de restriction (20) pour une installation affleurante ou encastrée du dispositif de restriction (20) par rapport au flanc (12) du plateau (10).

6. Chariot (1) selon l'une quelconque des revendications précédentes, dans lequel :
- le dispositif de restriction (20) comprend une équerre (23B, 24B), qui est configurée pour se mettre en prise avec la partie supérieure (11) du plateau (10), et dans lequel
- l'équerre (23B, 24B) du dispositif de restriction (20) et la partie supérieure (11) du plateau (10) comprennent des ouvertures d'alignement de manière à recevoir un élément de fixation pénétrant (40) permettant de fixer l'équerre (20) au plateau (10) par le haut.

7. Chariot (1) selon la revendication 6, dans lequel la partie supérieure (11) du plateau (10) comporte un renfoncement (15) qui possède au moins une profondeur égale ou supérieure à l'épaisseur de l'équerre (23B, 24B) du dispositif de restriction (20).

8. Chariot (1) selon l'une quelconque des revendications précédentes, dans lequel le corps généralement en forme de L (21) du dispositif de restriction (20) comprend deux sections perpendiculaires entre elles, qui comprennent l'une et l'autre ladite patte (22B, 25B) et une équerre (23B, 24B).

9. Chariot (1) selon l'une quelconque des revendications précédentes, dans lequel le plateau (10) est fait d'un matériau polymère et dans lequel le dispositif de restriction (20) est fait d'un matériau métallique.

10. Chariot selon l'une quelconque des revendications 1 à 8 précédentes, dans lequel le plateau et le dispositif de restriction sont faits d'un matériau polymère et dans lequel le dispositif de restriction est configuré pour être attaché au flanc du plateau au travers d'une liaison d'ajustement de forme établie par coopération de formes sur le plateau et le dispositif de restriction, dans lequel l'accouplement entre le plateau et le dispositif de restriction est aidé par des propriétés élastiques du matériau polymère du dispositif de restriction.

11. Chariot (1) selon l'une quelconque des revendications précédentes, dans lequel le chariot (1) est une palette à roulettes propulsée à la main.
